# EUROPÄISCHE PATENTSCHRIFT

(11) **EP 0 407 709 B1**
(45) Veröffentlichungstag und Bekanntmachung des Hinweises auf die Patenterteilung: **14.07.1993**
(21) Anmeldenummer: 90109325.2
(22) Anmeldetag: 17.05.1990
(51) Int. Cl.: H01B 13/02, H02K 15/04, B21F 7/00, D07B 5/00

(54) **Verfahren zur Herstellung von Röbelstäben**
Method for manufacturing Roebel-bars
Procédé pour fabriquer des barres Roebel

(30) Priorität: 14.07.1989 DE 3923310
(43) Veröffentlichungstag der Anmeldung: 16.01.1991
(73) Patentinhaber: LACKDRAHT UNION GMBH, D-27232 Sulingen (DE)
(72) Erfinder: Hofmann, Fritz, D-8508 Wendelstein (DE); Schaumburg, Wilhelm, D-3548 Arolsen (DE)
(74) Vertreter: Mende, Eberhard, Dipl.-Ing.

(56) Entgegenhaltungen:
- EP-A- 0 120 154
- AT-B- 105 677
- DE-A- 1 440 864
- DE-A- 1 615 599
- DE-A- 2 829 719
- DE-C- 740 651

## Beschreibung

Die Erfindung betrifft ein Verfahren zur Herstellung von Röbelstäben.

Röbelstäbe sind durch Verdrillen von eckigen Profildrähten erzeugte Stäbe. Das Verdrillen von eckigen Profildrähten nennt man "Verröbeln. Die bisher übliche Methode zur Herstellung von Röbelstäben besteht darin, daß die mit Kröpfungen vorgefertigten Profildrähte von Hand paketiert werden. Diese Methode erfordert einmal ein sehr genaues Vorfertigen der einzelnen im Paket den Röbelstab ergebenden Profildrähte und ferner eine umständliche, zeit- und kostenaufwendige Handhabung beim Zusammenbau des Röbelstabs den einzelnen Profildrähten.

Der Erfindung liegt nun die Aufgabe zugrunde, den Vorgang zu Herstellung von Röbelstäben zu mechanisieren, damit zu vereinfachen, zu beschleunigen und im Ergebnis kostengünstig zu gestalten.

Zur Lösung dieser Aufgabe wird erfindungsgemäß vorgeschlagen daß mehrere Profildrähte derart in einem Röbelwerkzeug zusammengeführt werden, daß sich Abschnitte mit unverdrillten parallel zusammengeführten Profildrähten und Abschnitte mit verdrillten, verröbelten Profildrähten kontinuierlich aneinanderreihen und daß der jeweils vorderste Strangabschnitt im unverdrillten Bereich als Röbelstab periodisch vom Strang abgetrennt wird.

Die Erzeugung der Röbelstäbe erfolgt erfindungsgemäß also automatisch in einem üblichen Röbelwerkzeug, wie es zur Herstellung verröbelter Leiter Verwendung findet. Dabei wird das Röbelwerkzeug so gesteuert, daß es kontinuierlich unverdrillte Abschnitte mit parallel zusammengeführten Profildrähten und verröbelte Abschnitte erzeugt.

Im Bereich der unverdrillten Abschnitte wird der jeweils vorderste Strangabschnitt unter Bildung des Röbelstabs abgetrennt. Der Röbelstab hat einen mittleren Hauptabschnitt mit verröbelten Profildrähten, während an seinen beiden Endabschnitten die Profildrähte unverdrillt sind.

Bei Anwendung des erfindungsgemäßen Verfahrens gelingt es, Röbelstäbe auf vorhandenen Anlagen ohne Handarbeit automatisch und damit kostengünstig zu erzeugen.

Anhand der Zeichnung wird die Erfindung näher erläutert. Es zeigen:

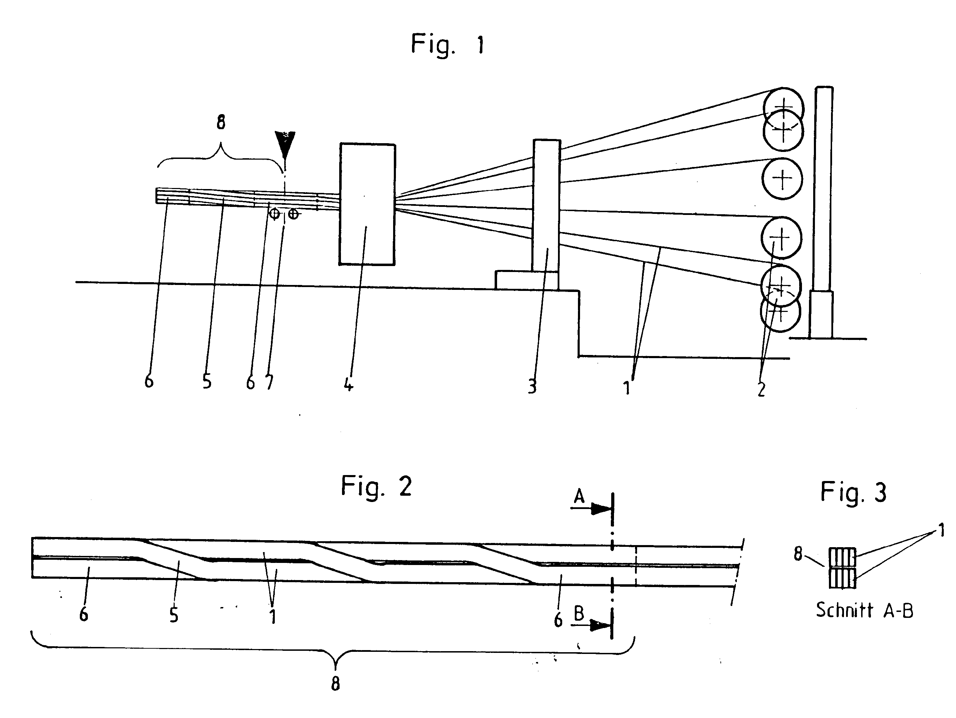

- Fig. 1: schematisch die Anlage zur Herstellung von Röbelstäben,
- Fig. 2: einen Röbelstab in Draufsicht und
- Fig. 3: einen Schnitt längs der Linie A-B aus Fig 2.

Die Profildrähte 1 werden von mehreren Vorratsrollen 2 durch Bohrungen in einem drehbaren Rad 3 gezogen, zum Röbelwerkzeug 4 geführt und dort zu einem Paket zusammengeführt und verröbelt.

Erfindungsgemäß werden in dem Röbelwerkzeug 4 nun zyklisch verröbelte Strangabschnitte 5 und unverdrillte Abschnitte 6 gebildet. Im Bereich der unverdrillten Abschnitte 6 wird mittels eines Trennwerkzeugs 7 der jeweils vorderste Strangabschnitt 8 unter Bildung des Röbelstabs abgetrennt.

Der Vorschub des Strangs muß zum Abtrennen nicht unterbrochen werden, wenn das Trennwerkzeug 7 mit der Strangabzugsgeschwindigkeit neben dem Strang herbewegt und nach Beendigung des Schnittvorgangs an die neue Schnittstelle zurückgefahren wird.

## Patentansprüche

1. Verfahren zur Herstellung von Röbelstäben,
**dadurch gekennzeichnet,** daß mehrere Profildrähte derart in einem Röbelwerkzeug zusammengeführt werden, daß sich Abschnitte mit unverdrillten parallel zusammengeführten Profildrähten und Abschnitte mit verdrillten, verröbelten Profildrähten kontinuierlich aneinanderreihen und daß der jeweils vorderste Strangabschnitt im unverdrillten Bereich als Röbelstab periodisch vom Strang abgetrennt wird.

## Claims

1. A method of manufacturing roebel bars, characterized in that a number of profile wires are so brought together in a roebeling (twisting) tool that portions with untwisted combined profile wires extending in parallel and portions with twisted, roebeled profile wires continuously succeed one another, and the front strand portion of the untwisted zone is periodically parted from the strand as a roebel bar.

## Revendications

1. Procédé pour la fabrication de barres Roebel,
caractérisé en ce que plusieurs fils métalliques profilés sont guidés ensemble dans un outil Röbel de telle manière que des sections avec des fils métalliques profilés parallèles non toronnés et des sections avec des fils métalliques profilés toronnés transposés se suivent les unes les autres en continu et que la section de ligne respectivement la plus en avant est séparée périodiquement de la ligne dans la zone non toronnée sous forme de barre Roebel.
